(19) Europäisches Patentamt
European Patent Office
Office européen des brevets

(11) EP 2 065 349 A1

(12) **EUROPEAN PATENT APPLICATION**
published in accordance with Art. 153(4) EPC

(43) Date of publication:
**03.06.2009 Bulletin 2009/23**

(21) Application number: **07807282.4**

(22) Date of filing: **13.09.2007**

(51) Int Cl.:
***C04B 24/26*** *(2006.01)* ***C08F 290/06*** *(2006.01)*
***C08G 65/332*** *(2006.01)* ***C08G 81/02*** *(2006.01)*
***C04B 103/40*** *(2006.01)*

(86) International application number:
**PCT/JP2007/067875**

(87) International publication number:
**WO 2008/032798 (20.03.2008 Gazette 2008/12)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **13.09.2006 JP 2006248508**

(71) Applicant: **Toho Chemical Industry Co., Ltd.
Tokyo 104-0044 (JP)**

(72) Inventors:
- **IKEDA, Akira
Sodegaura-shi
Chiba 299-0266 (JP)**
- **KOSHISAKA, Seiichi
Sodegaura-shi
Chiba 299-0266 (JP)**
- **SUGA, Akira
Sodegaura-shi
Chiba 299-0266 (JP)**
- **OKADA, Tomohisa
Sodegaura-shi
Chiba 299-0266 (JP)**

(74) Representative: **Schaad, Balass, Menzl & Partner AG
Dufourstrasse 101
Postfach
8034 Zürich (CH)**

(54) **CEMENT DISPERSANT**

(57) The present invention relates to a cement dispersant, and an object thereof is to provide a cement dispersant having high water reducing property, low setting retardation and low concrete viscosity and taking also applicability into account. The cement dispersant comprises a polycarboxylic acid polymer formed by structural unit (I) composed of a reactive alcohol alkylene oxide adduct and structural unit (II) composed of a reactive dibasic acid, and preferably further structural unit (III) containing polyamide polyamine in the unit, wherein fumaric acid and/or a derivative thereof is used as a partial or main starting material of the structural unit (II). The cement dispersant is excellent in water reducing property, setting retardation and concrete viscosity.



Printed by Jouve, 75001 PARIS (FR)

## Description

### TECHNICAL FIELD

The present invention relates to a cement dispersant excellent in water reducing property and retainability.

### BACKGROUND ART

Conventionally, for the purpose of securing the fluidity of a cement composition such as concrete, a ligninsulfonate, a naphthalenesulfonic acid-formaldehyde condensate salt, a melaminesulfonic acid-formaldehyde condensate salt have been used as a cement dispersant. However, the above cement dispersants have been faced with such problems that the dispersing performance is not satisfactory and the slump loss is extremely large.
In recent years, a high performance AE water reducing agent represented by a polycarboxylic acid polymer has become widely prevalent as an admixture combining high water reducing performance with slump loss reducing effect. It is innate characteristic of the high performance AE water reducing agent to exhibit more excellent water reducing performance than that of a conventional cement dispersant, however, the high performance AE water reducing agent has also such characteristic that when it is used in the range of an appropriate amount, it can reduce the slump loss substantially without affecting the setting retardation of the concrete. Such performance that cannot be seen in other agents is also in an important position.
As a cement dispersant for improving the dispersing performance, various techniques thereof are published. For example, as a cement dispersant using a copolymer containing as essential components, a polyalkyleneglycol alkenyl ether-based monomer and an unsaturated carboxylic acid-based monomer, there can be mentioned the followings: a cement dispersant containing as a main component, a copolymer derived using a polyethyleneglycol monoallyl ether monomer (I), a maleic acid-based monomer (II) and a monomer (III) copolymerizable with these monomers in specific ratios (Patent Document 1); a cement dispersant containing as a main component, a copolymer produced by copolymerizing an unsaturated polyalkyleneglycol ether-based monomer (I), a maleic acid-based monomer (II) and another monomer (III) copolymerizable with these monomers in specific copolymerization ratios (Patent Document 2); a cement dispersant containing as essential components, two types of copolymers such as a copolymer (A) containing a short-chain polyalkyleneglycol alkenyl ether-based monomer and an unsaturated carboxylic acid-based monomer and a copolymer (B) containing a long-chain polyalkyleneglycol alkenyl ether-based monomer and an unsaturated carboxylic acid-based monomer (Patent Document 3); an amino group-containing polymer usable as a cement dispersant which is obtained by copolymerizing an unsaturated carboxylic acid-based monomer and/or an unsaturated acid anhydride-based monomer with an unsaturated alcohol-based monomer and is produced by introducing amino groups into a part of the obtained copolymer (Patent Document 4); and an unsaturated alcohol alkylene oxide adduct-based polymer containing an unsaturated monomer that contains nitrogen atoms, an unsaturated alcohol alkylene oxide and an unsaturated carboxylic acid-based monomer which can be preferably used in a cement admixture for an ultra high strength concrete (Patent Document 5).
Thus, many copolymers as cement dispersants are studied and proposed, however, the development of agents having further excellent performance for the water reducing property, the retainability and the concrete viscosity have been desired.
On the other hand, examples of the polycarboxylic acid-based cement dispersants described in the above documents, as the unsaturated carboxylic acid-based monomer usable in polycarboxylic acid polymers, include (meth) acrylic acid, crotonic acid, maleic acid (anhydride), fumaric acid, itaconic acid and citraconic acid. However, in examples of these documents, there are described only examination examples using (meth)acrylic acid as an unsaturated monocarboxylic acid-based monomer and using maleic acid (anhydride) as an unsaturated dicarboxylic acid-based monomer, and an examination study in which a copolymer using other carboxylic acids such as fumaric acid is prepared and the prepared copolymer is used as a practical matter in a cement dispersant has not been investigated until now.
Here, in Patent Document 6, there is described Example 4 in which a water-soluble copolymer was obtained from an unsaturated alcohol-based component unit (3-methyl-3-butene-1-ol ethylene oxide/propylene oxide adduct) and fumaric acid, however, it remains only used in an examination for evaluating the dispersing performance of satin white (calcium sulfoalminate hexahydrate) (Table 1). In addition, in the present document, although the use of the copolymer in a scale preventing agent, an inorganic pigment dispersant and a detergent bilder is proposed, there is no description on an actual use of the copolymer as a cement dispersant and also no description indicating the actual use thereof.

[Patent Document 1]
Examined Japanese Patent Application Publication No. JP-B-58-38380
[Patent Document 2]
Japanese Patent Application Publication No. JP-A-10-236858

[Patent Document 3]
Japanese Patent Application Publication No. JP-A-2001-302306
[Patent Document 4]
Japanese Patent Application Publication No. JP-A-2003-192722
[Patent Document 5]
Japanese Patent Application Publication No. JP-A-2003-327644
[Patent Document 6]
Japanese Patent Application Publication No. JP-A-62-68806

## DISCLOSURE OF THE INVENTION

### [Problems to be Solved by the Invention]

Under the background of such a conventional technology, the present invention has been performed for enhancing the performance of a cement dispersant and the task thereof is to provide a cement dispersant having water reducing property, low setting retardation and low concrete viscosity and taking also applicability into account.

### [Means for Solving the Problems]

The present inventors have made extensive and intensive studies and as a result, they have found that in the production of a polycarboxylic acid polymer containing a reactive alcohol derivative and a dibasic acid-based derivative which have polymerizable binding sites, by using fumaric acid and/or fumaric acid-based derivatives as the dibasic acid-based derivative, the basic performance as the cement dispersant is extremely enhanced. In addition, the inventors have also found that by containing a polyamide polyamine in the polycarboxylic acid polymer, various performance as the concrete dispersant are further enhanced.

That is, the present invention relates to a cement dispersant having a polycarboxylic acid polymer composed of a structural unit derived from a polyalkyleneglycol alkenyl ether-based compound and a structural unit derived from an unsaturated carboxylic acid-based compound in which a part or all of the structural unit derived from the unsaturated carboxylic acid-based compound is a structural unit derived from fumaric acid and/or a fumaric acid derivative.

The present invention also relates to a cement dispersant, in which the polycarboxylic acid polymer is composed of the following structural unit (I) and structural unit (II), and a part or all of the structural unit (II) is a structural unit derived from fumaric acid and/or a fumaric acid derivative:

[Chemical Formula 1]

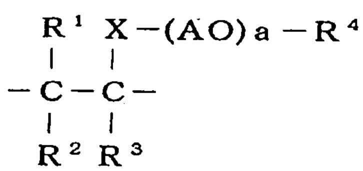

(I)

(where $R^1$, $R^2$, $R^3$ and $R^4$ independently represent a hydrogen atom or a C1 to C22 hydrocarbon group; X represents $-(CH_2)_bO-$; AO represents a C 2 to C4 alkylene oxide group; a represents an average addition mol number of an alkylene oxide of 1 to 200; and b represents an integer of 1 to 20), and

[Chemical Formula 2]

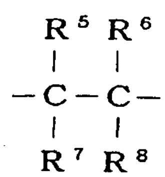

(II)

(where $R^5$ and $R^6$ independently represent a hydrogen atom or a C1 to C22 hydrocarbon group; $R^7$ and $R^8$ independently represent -COOH, -COOM or -COOY, and a part of $R^7$ and $R^8$ can be together to form an acid anhydride; M

represents an alkali metal, an alkaline earth metal, ammonium or alkanolamine; Y represents a C1 to C22 hydrocarbon group or $(AO)c-R^9$; AO represents a C2 to 4C alkylene oxide group; c represents an average addition mol number of an alkylene oxide of 1 to 200; and $R^9$ represents a hydrogen atom or a C1 to C22 hydrocarbon group).

Further, the present invention relates to a cement dispersant in which the polycarboxylic acid polymer is composed of, besides the structural unit (I) and the structural unit (II), further the following structural unit (III):

[Chemical Formula 3]

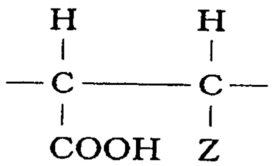

(III)

(where Z represents a group in which a polyamide polyamine produced by condensing a dibasic acid and a polyalkylene polyamine and/or a polyamide polyamine modified product produced by adding 0.1 to 10 moles of a C2 to C4 alkylene oxide to the polyamide polyamine relative to one equivalent of an activated imino group, an amino group, and an amide residue of the polyamide polyamine, is/are bonded to a carbon atom of a main chain via an amide bond).

Further, the present invention relates to a cement dispersant having, besides the polycarboxylic acid polymer, a polyamide polyamine produced by condensing a dibasic acid and a polyalkylene polyamine and/or a polyamide polyamine modified product produced by adding 0.1 to 10 moles of a C2 to C4 alkylene oxide to the polyamide polyamine relative to one equivalent of an activated imino group, an amino group, and an amide residue of the polyamide polyamine.

[Effects of the Invention]

According to the present invention, a cement dispersant having not only excellent water reducing property and excellent slump maintaining performance, but also advantageous applicability such as low concrete viscosity and little setting retardation can be provided.

BEST MODES FOR CARRYING OUT THE INVENTION

The present invention relates to a cement dispersant containing a polycarboxylic acid polymer composed of structural units derived from polyalkyleneglycol alkenyl ether-based compounds and structural units derived from unsaturated carboxylic acid-based compounds in which a part or all of the structural units derived from unsaturated carboxylic acid-based compounds are structural units derived from fumaric acid and/or fumaric acid derivatives. More specifically, the polycarboxylic acid polymer is composed of the above-shown structural unit (I) and structural unit (II). Further, the polycarboxylic acid polymer is composed of, besides the structural unit (I) and the structural unit (II), the structural unit (III) derived from a polyamide polyamine and/or a polyamide polyamine modified product. The thus composed polycarboxylic acid polymer has a structure of a comb-shaped polymer in which a graft chain such as a polyalkylene oxide chain, and a polyamide polyamine chain is bonded to the main chain backbone of the polymer.
In addition, the cement dispersant of the present invention may contain, besides the polycarboxylic acid polymer, a polyamide polyamine and/or a polyamide polyamine modified product.
Hereinafter, the present invention is described in detail.

(Structural unit (I) and structural unit (II))

The structural unit (I) composing the polycarboxylic acid polymer which is the cement dispersant of the present invention is represented by the following formula:

[Chemical Formula 4]

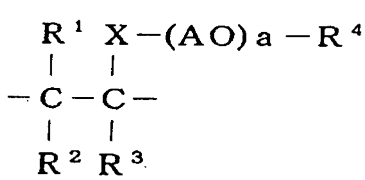

(I)

(where $R^1$, $R^2$, $R^3$ and $R^4$ independently represent a hydrogen atom or a C1 to C22 hydrocarbon group; X represents $-(CH_2)_bO-$; AO represents a C2 to C4 alkylene oxide group; a represents an average addition mol number of an alkylene oxide of 1 to 200; and b represents an integer of 1 to 20).

In the above formula, AO is preferably composed of C2 ethylene oxide or two or more types of alkylene oxides and in this case, the addition reaction may be any of a block addition or a random addition.
In the case where two or more types of alkylene oxides are used, in an average addition mol number of an alkylene oxide represented by a, a C 3 or C4 alkylene oxide constitutes preferably 0.1 to less than 30 mol%. Particularly, 0.1 to less than 20 mol% of the C3 or C4 alkylene oxide are desirably located in a terminal side of the alkylene oxide chain (bonding position with $R^4$) in terms of improving performance such as water reducing property, retainability, and concrete viscosity.

Further, in the above formula, particularly $R^4$ is preferably a hydrogen atom or a C1 to C6 hydrocarbon group (methyl group, ethyl group, propyl group, isopropyl group, butyl group, phenyl group, etc.).

The structural unit (I) is a structural unit derived from, for example the following compounds: alkenyl ethers formed from (alkoxy) polyalkylene glycols such as polyalkyleneglycol monoallyl ether, polyalkyleneglycol monoalkenyl ether, methoxypolyalkyleneglycol monoallyl ether, and methoxypolyalkyleneglycol monoalkenyl ether, and C3 to C8 alkenyl ethers; and unsaturated aliphatic ethers which are unsaturated aliphatic alcohol alkylene oxide adducts. Specific examples thereof can include alkylene oxide adducts of 3-methyl-3-butene-1-ol, alkylene oxide adducts of 2-propene-1-ol (allyl alcohol) and ethers thereof. Among them, specific examples of the most preferred compound include an alkylene oxide adduct of 3-methyl-3-butene-1-ol.
The structural unit (I) may be a structural unit derived from an individual compound or a plurality of combinations of compounds among these compounds.

The structural unit (II) composing the polycarboxylic acid polymer which is the cement dispersant of the present invention is represented by the following formula:

[Chemical Formula 5]

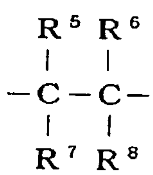

(II)

(where $R^5$ and $R^6$ independently represent a hydrogen atom or a C1 to C22 hydrocarbon group; $R^7$ and $R^8$ independently represent -COOH, -COOM or -COOY, and a part of $R^7$ and $R^8$ can be together to form an acid anhydride; M represents an alkali metal, an alkaline earth metal, ammonium or alkanolamine; Y represents a C1 to C22 hydrocarbon group or $(AO)_c-R^9$; AO represents a C2 to C4 alkylene oxide group; c represents an average addition mol number of an alkylene oxide of 1 to 200; and $R^9$ represents a hydrogen atom or a C 1 to C22 hydrocarbon group).

The structural unit (II) is specifically a structural unit derived from fumaric acid, maleic acid, maleic acid anhydride or the like and contains at least in a part thereof, a structural unit derived from fumaric acid and/or fumaric acid derivatives. When the structural unit (II) contains an acid (-COOH) and/or a salt of an acid (-COOM), it may be in an acid form or in a neutralized form, however, as a product form, a partially neutralized form or a fully neutralized form is preferred.
In addition, when the structural unit (II) contains an acid derivative (-COOY), specific examples of Y include a C 1 to C22 partial ester or a full ester, a partial ester or a full ester of polyalkylene oxide adducts and a partial ester or a full ester of alkoxy polyalkylene glycols. Alkylene oxides can be added individually or added in combination and when two or more types of alkylene oxides are used, the addition reaction may be any of a block addition or a random addition.
Specific examples of the fumaric acid derivative can include methoxypolyethyleneglycol difumarate.

It is preferred in terms of water reducing property and slump retainability that the structural unit (II) contains a structural unit derived from fumaric acid and/or fumaric acid derivatives in a ratio of preferably 10 to 100% by mass, more preferably 20 to 100% by mass, particularly preferably 30 to 100% by mass, most preferably 50 to 100% by mass based on the total mass of all of the structural unit (II).

(Structural unit (III))

In addition, the polycarboxylic acid polymer which is the cement dispersant of the present invention can be

composed of, besides the structural units (I) and (II), a structural unit (III) represented by the following formula:

[Chemical Formula 6]

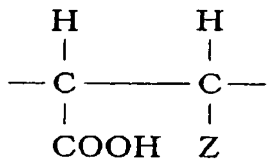

(III)

(where Z represents a group in which a polyamide polyamine produced by condensing a dibasic acid and a polyalkylene polyamine and/or a polyamide polyamine modified product produced by adding 0.1 to 10 moles of a C2 to C4 alkylene oxide to the polyamide polyamine relative to one equivalent of an activated imino group, an amino group, and an amide residue of the polyamide polyamine, is/are bonded to a carbon atom of the main chain via an amide bond).

Examples of the dibasic acid composing Z in the structural unit (III) include aliphatic saturated dibasic acids having a total carbon number of 2 to 10 such as oxalic acid, malonic acid, succinic acid, glutaric acid, adipic acid, pimelic acid, suberic acid, azelaic acid and sebacic acid. In addition, examples of the polyalkylene polyamine composing Z can include ethylenediamine, diethylenetriamine, triethylenetetramine, tetraethylenepentamine, pentaethylenehexamine, hexaethyleneheptamine or mixtures of polymer polyethylene polyamines which are mixtures containing ethylene units and nitrogen atoms in a large amount.

The structural unit (III) is a structural unit in which a polyamide polyamine which is a condensate of such a dibasic acid and a polyalkylene polyamine and/or a polyamide polyamine modified product produced by adding 0.1 to 10 moles of a C2 to C4 alkylene oxide to the polyamide polyamine relative to one equivalent of an activated imino group, an amino group, and an amide residue of the polyamide polyamine, is/are bonded with maleic acid anhydride, maleic acid or fumaric acid via an amide bond.
Since some of these polyamide polyamines or polyalkylene oxide modified polyamide polyamines have a characteristic exhibiting basicity in an aqueous solution thereof, they may act as a neutralizer of a polycarboxylic acid polymer.

(Composing ratio of each structural unit)

In the above-described polycarboxylic acid polymer composed of the structural unit (I) and the structural unit (II), it is preferred that the composing ratios of these structural units are in a range of structural unit (I) : structural unit (II) = 95 to 60% by mass : 5 to 40% by mass, preferably structural unit (I) : structural unit (II) = 90 to 70% by mass : 10 to 30% by mass, particularly preferably structural unit (I) : structural unit (II) = 90 to 80% by mass : 10 to 20% by mass.
In addition, in the polycarboxylic acid polymer composed of the structural unit (I) to the structural unit (III), it is preferred that the composing ratios are in a range of structural unit (I) : structural unit (II) : structural unit (III) = 90 to 50% by mass : 8 to 40% by mass : 2 to 10% by mass, preferably structural unit (I) : structural unit (II) : structural unit (III) = 90 to 60% by mass : 8 to 30% by mass : 2 to 7% by mass (with the proviso that the total mass ratio of the structural unit (I) and the structural unit (II) or of the structural unit (I) to the structural unit (III) is 100% by mass).

(Another structural unit (IV) which can be contained)

The polycarboxylic acid polymer can contain structural unit (IV) besides the structural units (I) to (III).
Examples of compounds from which the other structural unit (IV) that can be contained is derived include compounds exemplified as monomers in common use for a polycarboxylic acid-based cement dispersant, such as (meth)acrylic acid (salt), (meth)acrylic acid polyalkyleneglycol monoalkyl ether, (meth)allyl sulfonic acid (salt), styrene sulfonic acid (salt), (meth)acrylic acid alkyl, styrene, and (meth) acrylamide, and the type thereof is not particularly limited so long as the compound can be polymerized with the structural units (I) to (III). Particularly, it is one of means which can be easily considered by a combination with Japanese Patent No. 3780465 etc. to incorporate in the polycarboxylic acid polymer, a structural unit derived from an alkali-hydrolysable compound for imparting slump maintaining property to the polycarboxylic acid polymer.
The composing ratio of the structural unit (IV) is preferably in a range of the above polycarboxylic acid polymer etc. (structural units (I) to (III)) : structural unit (IV) = 100 to 70% by mass : 0 to 30% by mass (with the proviso that the total composing ratio is 100% by mass).

(Polyamide polyamine and/or polyamide polyamine modified product)

It is preferred for improving the concrete viscosity that the cement dispersant of the present invention contains, besides the polycarboxylic acid polymer, a polyamide polyamine produced by condensing a dibasic acid and a polyalkylene polyamine and/or a polyamide polyamine modified product produced by adding 0.1 to 10 moles of a C2 to C4 alkylene oxide to the polyamide polyamine relative to one equivalent of an activated imino group, an amino group, an amide residue of the polyamide polyamine.
The content ratio of the polyamide polyamine and/or the polyamide polyamine modified product is preferably in a range of the polycarboxylic acid polymer : polyamide polyamine and/or polyamide polyamine modified product = 98 to 90% by mass: 2 to 10% by mass.
Examples of the polyalkylene polyamine composing the polyamide polyamine include ethylenediamine; diethylenetriamine; triethylenetetramine; tetraethylenepentamine; pentaethylenehexamine; hexaethyleneheptamine; mixtures of polymer polyethylene polyamines which are mixtures containing ethylene units and nitrogen atoms in a large amount; polymers of cyclic imines such as polyethyleneimine, polypropyleneimine, poly-3-methylpropylimine, poly-2-ethylpropylimine; and polymers of unsaturated amines such as polyvinylamine and polyallylamine. Further, the polyalkylene polyamine may be copolymers produced by copolymerizing a cyclic imine such as ethyleneimine, propyleneimine, 3-methylpropyleneimine and 2-ethylpropyleneimine, or unsaturated amides or unsaturated imides such as N-vinylacetamide, N-vinylformamide and N-vinylphthalimide with an unsaturated compound copolymerizable with the above compounds. Examples of the unsaturated compound copolymerizable with a cyclic imine, an unsaturated amide, an unsaturated imide etc. include dimethylacrylamide; styrene; methyl acrylate; methyl methacrylate; acrylic acid, methacrylic acid, styrenesulfonic acid and salts of these acids; cyclic sulfide compounds such as ethylenesulfide and propylenesulfide; cyclic ethers such as oxetane, mono- or bisalkyloxetanes, mono- or bisalkylchloromethyloxetanes, tetrahydrofuran and mono-or bisalkyltetrafluorofurans; cyclic formals such as 1,2-dioxofuran and trioxofuran; and N-substituted alkylimines such as N-methylethyleneimine.
Examples of the dibasic acids composing the polyamide polyamine include aliphatic saturated dibasic acids having a total carbon number of 2 to 10 such as oxalic acid, malonic acid, succinic acid, glutaric acid, adipic acid, pimelic acid, suberic acid, azelaic acid and sebacic acid.
As the dibasic acid, derivatives thereof can also be used and examples thereof can include dibasic acid anhydrides (such as anhydrides of the above dibasic acids), dibasic acid esters (such as monomethyl esters, monoethyl esters, monobutyl esters, monopropyl esters, dimethyl esters, diethyl esters, dibutyl esters and dipropyl esters of the above dibasic acids) or dibasic acid dihalides (such as dichlorides, dibromides and diiodides of the above dibasic acids).
In addition, the polyamide polyamine modified product represents a compound in which 0.1 to 10 moles of a C2 to C4 alkylene oxide are added to the polyamide polyamine relative to one equivalent of an activated imino group, an amino group, an amide residue of the polyamide polyamine. That is, examples of the alkylene oxides include ethylene oxide, propylene oxide and butylene oxide, and these compounds may be used individually or in combination. When two types or more of alkylene oxides are used, such alkylene oxides may be block-polymerized or random-polymerized.

(Method for producing each structural unit and polycarboxylic acid polymer)

In obtaining the polycarboxylic acid polymer which is the cement dispersant of the present invention, the method for producing polyalkyleneglycol alkenyl ether-based compounds from which the structural unit (I) is derived and the polymerization method for obtaining the polycarboxylic acid polymer are not particularly limited.
However, in the alkylene oxide addition reaction during producing the polyalkyleneglycol alkenyl ether-based compound, the compound is necessary to be produced with paying attention to that a polymerization active group (unsaturated group) does not lose the polymerization activity thereof, that the transfer of the position of a polymerization active group is prevented, that the by-produced diol content is reduced, and the like. Here, these alcohol polyalkylene oxide adducts having a polymerization active group can be used as a raw material for the polymerization regardless of whether a purifying process is performed or not after the production thereof.
In the method for producing the polycarboxylic acid polymer, the similar polymer can be obtained by any method of a solvent polymerization, an aqueous solution polymerization, a continuous type and a batch-wise type, however, since it is necessary to pay attention to the solubility of compounds subjected to the copolymerization, generally the polymerization is frequently performed by an aqueous solution polymerization.
Examples of the method for producing the structural unit (III) can include: a method in which according to a usual amidation method, a dibasic acid and a polyamide polyamine are condensed and further, between the resultant condensate and maleic acid, fumaric acid or maleic anhydride, an amide group is formed, if necessary alkylene oxide is added thereto; a method in which a condensate of a dibasic acid with a polyamide polyamine or an alkylene oxide modified polyamide polyamine in which alkylene oxide is added is formed and the condensate or the modified polyamide polyamine is grafted to a polycarboxylic acid polymer; and a method in which a polyamide polyamine is formed, and

then alkylene oxide is added to a polymer aqueous solution in which the polyamide polyamine is grafted to a polycarboxylic acid polymer.

The finally obtained polycarboxylic acid polymer which is the cement dispersant of the present invention has a weight average molecular weight (measured by a gel permeation chromatography method (hereinafter, referred to as "GPC method"), converted into that as polyethylene glycol) appropriately in the range of 10,000 to 500,000 and when the weight average molecular weight is out of this range, the water reducing property is remarkably lowered or desired slump-loss reducing effect cannot be obtained. It is desirable that the weight average molecular weight is more preferably in the range of 10,000 to 100,000 for further expressing water reducing property. In addition, by adjusting the type and/or the amount used of a radical polymerization initiator or the like in the aqueous solution polymerization, the molecular weight can be controlled, however, by using a chain transfer agent in combination with the radical polymerization initiator or the like, the control of the molecular weight distribution is also possible.
Here, in the present invention, "polymer" means the polymer itself or the polymer in a broad sense also including components containing unreacted components and by-products generated during each polymerization process, an alkylene oxide addition process, or the like.

(Cement admixtures and additives capable of being used in combination)

The cement dispersant of the present invention can be produced as a cement admixture by employing and combining suitable public known and public used admixtures and the like corresponding to various concrete production conditions. Specific examples of the above admixture include cement dispersants other than the cement dispersants of the present invention, air-entraining agents, setting retarders, accelerators, separation reducing agents, thickeners, antifoamers and contraction reducing agents.
Here, the cement dispersant containing the polycarboxylic acid polymer of the present invention includes both a form of a cement admixture prepared by blending a public known and public used admixture besides the above polycarboxylic acid polymer and a form prepared by adding the above polycarboxylic acid polymer and a public known and public used admixture separately during the concrete production and by mixing these agents finally in the concrete. Hereinafter, the public known and public used admixture will be exemplified.

Generally, the cement dispersants are used in an appropriate combination thereof corresponding to the production conditions of or the performance requirements for the concrete. The cement dispersant of the present invention is also in the same condition and is used individually as a cement dispersant or as the main agent thereof. However, it can be used as a modifying assistant for a cement dispersant exhibiting large slump-loss or can be used in combination with a cement dispersant exhibiting high initial water reducing property.
As a public known cement dispersant other than that of the present invention, there can be mentioned salts of polycarboxylic acid copolymer disclosed in, besides the above described Patent Document 1, Examined Japanese Patent Application Publication No. JP-B-59-018338, Japanese Patent Nos. 2628486, 2774445, 3235002, 3336456 and 3780456, etc. and further, salts of naphthalenesulfonic acid formaldehyde condensate, salts of melaminesulfonic acid formaldehyde condensate, ligninsulfonate, sodium gluconate, sugar alcohol, etc. The blending ratio of the cement dispersant of the present invention and a cement dispersant other than that of the present invention is 1:99 to 99: 1 % by mass.

Specific examples of the air-entraining agents include <1> anion-type air-entraining agents, <2> nonion-type air-entraining agents and <3> amphoteric-type air-entraining agents. Examples of <1> anion-type air-entraining agents include sulfate ester salts of higher alcohols (or alkylene oxide adducts thereof), alkylbenzensulfonic acid salts, salts of resin soaps such as rosin soaps and phosphate ester salts of higher alcohols (or alkylene oxide adducts thereof). Examples of <2> nonion-type air-entraining agents include alkylene glycols, alkylene oxide adducts of higher alcohols, esters of aliphatic acids and alkylene glycols and alkylene glycol adducts of sugar alcohols. Examples of <3> amphoteric-type air-entraining agents containing anion and cation include alkylbetaine type, alkylamidebetaine type and amino acid-based amphoteric activating agent-type. The preferred additive amount of the air-entraining agent is 0.001 to 0.03% by mass based on the mass of the cement dispersant.

Examples of the setting retarder include: <1> inorganic setting retarders such as phosphate salts, silicofluorides, zinc oxide, zinc carbonate, zinc chloride, zinc monoxide, copper hydroxide, magnesia salts, borax and boron oxide; and <2> organic setting retarders such as phosfon derivatives, sugars and derivatives thereof, oxycarboxylic acid salts and ligninsulfonates. Specific examples thereof include: phosfon derivatives such as aminotri(methylenephosphonic acid), aminotri(methylenephosphonic acid) 5-sodium salt, 1-hydroxyethylidene-1,1-diphosphonic acid, diethylenetriaminepenta(methylenephosphonic acid), and phosphonic acid of alkali metal salts and alkaline earth metal salts and derivatives thereof; and sugars such as saccharose, maltose, raffinose, lactose, glucose, fructose, mannose, arabinose, xylose, abitose, lipose; oxycarboxylic acid salts such as alkali metal salts and alkaline earth metal salts of gluconic acid, citric acid, glucoheptonic acid, malic acid and tartaric acid. The preferred additive amount of the setting retarder is 0.01 to 1.5% by mass based on the mass of the binding material such as cement.

Examples of the accelerators include: inorganic accelerators represented by calcium chloride, calcium nitrite,

and the like; and organic accelerators represented by alkanolamine, and the like. The preferred additive amount of the accelerator is 0.5 to 5% by mass based on the mass of the binding material such as cement.

Examples of the thickener/separation reducing agent include: <1> cellulose-based water-soluble polymers such as cellulose ethers (MC etc.); <2> polyacrylamide-based water-soluble polymers such as polyacrylamides; <3> biopolymers such as curdlan and welan gum; and <4> nonion type thickeners such as aliphatic acid diesters of polyalkylene glycols and polyalkylene glycol urethane condensates. The preferred blending ratio of the thickener/separation reducing agent is 0.01 to 0.5% by mass based on the mass of the concrete composition.

Examples of the antifoamers include: non-ion type antifoamers such as aliphatic alcohol alkylene oxide adducts, aliphatic acid alkylene oxide adducts, alkylene oxide di-aliphatic acid esters, polyalcohol alkylene oxide adducts and polyalkylene polyamine alkylene oxide adducts; silicone-based antifoamers in which a silicone oil is emulsified; higher alcohols in which a higher alcohol is emulsified; and a mixture containing the above compound as a main component. The preferred additive amount of the antifoamer is 0.01 to 1% by mass based on the mass of the cement dispersant.

Examples of the contraction reducing agent include polyalkyleneglycols and lower alcohol alkylene oxide adducts, and when these compounds are oleaginous, these compounds are emulsified. The preferred additive amount of the contraction reducing agent is 0.1 to 5% by mass based on the mass of the binding material such as cement.

The additive amount of the cement dispersant of the present invention is varied depending on the blending condition including the material of the concrete and generally, the cement dispersant is added in an amount of 0.05 to 5.0% by mass as the solid content based on the mass of the cement. For obtaining water reducing property and slump flow retention, the more the additive amount thereof is, the better. However, when the amount is too large, the setting retardation is caused and possibly, it leads to a curing failure. The using method thereof is similar to the case of a general cement dispersant, and is either the concentrate solution thereof is added during the concrete kneading, or the concentrate solution is diluted beforehand in a kneading liquid and then the diluted solution is added. Alternatively, after the concrete or mortar has been kneaded, the cement dispersant may be added and the resultant mixture may be homogeneously kneaded again. Here, the components other than the cement dispersant are components for the concrete conventionally in common use and examples of such components may include: cements (such as ordinary Portland cements, high early strength Portland cements, low heat/moderate heat Portland cements or blast furnace cements); aggregates (that is, fine aggregates and coarse aggregates); admixtures (such as silica fume, calcium carbonate powder and blast furnace slag powder); an expanding material; and water. In addition, examples of the admixtures other than the cement dispersant of the present invention which can be added separately during the preparation include the above-described publicly known and publicly used air-entraining agents, setting retarders, accelerators, separation-reducing agents, thickeners, antifoamers and contraction reducing agents, and also these admixtures may be appropriately blended. The blending ratio of each component can be appropriately determined according to the type of the component and the application of the cement.

The present inventors have made extensive and intensive studies on a large number of polymers and as a result, they have found that a cement dispersant containing a polycarboxylic acid polymer composed of structural units derived from a specific reactive alcohol polyalkyleneglycol and fumaric acid and of a polycarboxylic acid polymer containing in structural units thereof, the above polycarboxylic acid polymer and polyamide polyamine and/or polyalkylene oxide modified polyamide polyamine, has water reducing property and slump maintaining performance which are more excellent than those of a conventional similar compound. Further, they have found that the cement dispersant of the present invention has such effects that the concrete viscosity is low and the setting retardation is eliminated.

It has not yet been elucidated how the above-described excellent effects can be obtained. As one assumption for the effect, it can be considered that by using the above combination of structural units, particularly by changing a structural unit derived from maleic acid and/or derivatives thereof which has been conventionally widely used to a structural unit derived from fumaric acid and/or derivatives of fumaric acid, the sequence state of acid groups in the polymer is changed, which contributes to improving effect of dispersing performance of the cement. However, it is considered that various mechanisms other than the above-described mechanisms present, for example by using a fumaric acid-based compound, there are effects such that the rate of polymerization of the polycarboxylic acid polymer has been increased and consequently, unreacted monomers have been decreased and that the molecular weight of the polymer has become easily controlled, and a synergistic effect of these effects leads to an improving effect of the cement dispersing performance.

In addition, although such a result has been found that by blending a polyamide polyamine, an appropriate amount of air can be introduced stably into a fresh concrete, the relationship between the blending amount of polyamide polyamine and the stability of air introducing cannot have been elucidated thoroughly at the moment. However, it is considered that an effect in which air in an appropriate amount can be stably introduced is one cause of the effect of reducing the concrete viscosity.

[Examples]

Next, the present invention is described more in detail referring to examples. Here, the present invention is

obtained according to the above-described production method and should not be construed as limited by these examples. Here, unless specified otherwise, % shown below represents % by mass.

(Production Example A1 (production of EO added polyamide polyamine))

Into a reaction vessel with a stirring apparatus and equipped with a nitrogen introducing tube, a thermometer and a water measuring tube with a capacitor, 199 g of polyalkylene polyamine (trade name: Poly eight; manufactured by Tosoh Corporation) and 68 g of adipic acid were charged and stirred while introducing nitrogen, followed by elevating the temperature to 160˚C. The reaction was effected continuously for 8 hours and at the time point the acid value of the reaction mixture became 10, the reaction was terminated. The reaction dehydrated amount was 17 g. Next, 245 g of water were added to the reaction product to obtain an aqueous solution and the resultant solution was cooled to 60˚C. Then, at the same temperature, 89 g of ethylene oxide were added to the solution over 4 hours and thereafter, the reaction product was aged for one hour to obtain 584 g (solid content concentration: 58%) of an aqueous solution of EO added polyamide polyamine A1.

(Production Example A2 (production of polyamide polyamine))

Into a reaction vessel with a stirring apparatus and equipped with a nitrogen introducing tube, a thermometer and a water measuring tube with a capacitor, 199 g of polyalkylene polyamine (trade name: Poly eight; manufactured by Tosoh Corporation) and 68 g of adipic acid were charged and stirred while introducing nitrogen, followed by elevating the temperature to 160˚C. The reaction was effected continuously for 8 hours and at the time point the acid value of the reaction mixture became 10, the reaction was terminated. The reaction dehydrated amount was 17 g. Next, 250 g of water were added to the reaction product to obtain an aqueous solution and the resultant solution was cooled to 60˚C to obtain 500 g (solid content concentration: 50%) of an aqueous solution of polyamide polyamine A2.

(Production Example A3 (production of EOPO added polyamide polyamine))

Into a reaction vessel with a stirring apparatus and equipped with a nitrogen introducing tube, a thermometer and a water measuring tube with a capacitor, 199 g of polyalkylene polyamine (trade name: Poly eight; manufactured by Tosoh Corporation) and 68 g of adipic acid were charged and stirred while introducing nitrogen, followed by elevating the temperature to 160˚C. The reaction was effected continuously for 8 hours and at the time point the acid value of the reaction mixture became 10, the reaction was terminated. The reaction dehydrated amount was 17 g. Next, 356 g of water were added to the reaction product to obtain an aqueous solution and the resultant solution was cooled to 60˚C. Then, at the same temperature, to the solution, 89 g of ethylene oxide were added over 4 hours and next, 17 g of propylene oxide were added at the same temperature 60˚C over 1 hour. Thereafter, the reaction product was aged for 1 hour to obtain 712 g (solid content concentration: 50%) of an aqueous solution of EOPO added polyamide polyamine A3 (block adduct).

(Production Example B1 (production of polycarboxylic acid polymer))

Into a stainless steel autoclave equipped with a nitrogen introducing tube, a stirring apparatus and a thermometer, 402 g of 3-methyl-3-butene-1-ol 50EO2PO adduct (block adduct), 286 g of ion exchanged water, 6.62 g of maleic anhydride and 59.6 g of fumaric acid were charged with stirring. The nitrogen substitution was thoroughly performed and the temperature was elevated to 60˚C. Thereafter, 22.2 g of a 14% aqueous solution of sodium persulfate were charged and the reaction was effected for 6 hours while maintaining the same temperature. After the completion of the reaction, the temperature was elevated to 80˚C and the stirring was continued for one hour. Next, 26.7 g of an aqueous solution of polyamide polyamine A1 and 170 g of ion exchanged water were added and the reaction mixture was further stirred for one hour. The polymerization liquid was cooled to 50˚C and was neutralized using 25.0 g of a 48% aqueous solution of sodium hydroxide to obtain 998 g (solid content concentration: 50%, weight average molecular weight: 26,000) of an aqueous solution of polycarboxylic acid polymer B1.

(Production Example B2 (production of polycarboxylic acid polymer))

Into a stainless steel autoclave equipped with a nitrogen introducing tube, a stirring apparatus and a thermometer, 402 g of 3 -methyl-3-butene-1-ol 50EO2PO adduct (block adduct), 286 g of ion exchanged water, 33.1 g of maleic anhydride and 33.1 g of fumaric acid were charged with stirring. The nitrogen substitution was thoroughly performed and the temperature was elevated to 60˚C. Thereafter, 22.2 g of a 14% aqueous solution of sodium persulfate were charged and the reaction was effected for 6 hours while maintaining the same temperature. After the completion of the

reaction, the temperature was elevated to 80°C and the stirring was continued for one hour. Next, 26.7 g of an aqueous solution of polyamide polyamine A1 and 170 g of ion exchanged water were added and the reaction mixture was further stirred for one hour. The polymerization liquid was cooled to 50°C and was neutralized using 25.0 g of a 48% aqueous solution of sodium hydroxide to obtain 998 g (solid content concentration: 50%, weight average molecular weight: 29,000) of an aqueous solution of polycarboxylic acid polymer B2.

(Production Example B3 (production of polycarboxylic acid polymer))

Into a stainless steel autoclave equipped with a nitrogen introducing tube, a stirring apparatus and a thermometer, 402 g of 3-methyl-3-butene-1-ol 50EO adduct, 286 g of ion exchanged water, 6.62 g of maleic anhydride and 59.6 g of fumaric acid were charged with stirring. The nitrogen substitution was thoroughly performed and the temperature was elevated to 60°C. Thereafter, 22.2 g of a 14% aqueous solution of sodium persulfate were charged and the reaction was effected for 6 hours while maintaining the same temperature. After the completion of the reaction, the temperature was elevated to 80°C and the stirring was continued for one hour. Next, 30.4 g of an aqueous solution of polyamide polyamine A2 and 166 g of ion exchanged water were added and the reaction mixture was further stirred for one hour. The polymerization liquid was cooled to 50°C and was neutralized using 25.0 g of a 48% aqueous solution of sodium hydroxide to obtain 998 g (solid content concentration: 49%, weight average molecular weight: 31,000) of an aqueous solution of polycarboxylic acid polymer B3.

(Production Example B4 (production of polycarboxylic acid polymer))

Into a stainless steel autoclave equipped with a nitrogen introducing tube, a stirring apparatus and a thermometer, 402 g of 3-methyl-3-butene-1-ol 50EO adduct, 286 g of ion exchanged water, 6.62 g of maleic anhydride and 59.6 g of fumaric acid were charged with stirring. The nitrogen substitution was thoroughly performed and the temperature was elevated to 60°C. Thereafter, 22.2 g of a 14% aqueous solution of sodium persulfate were charged and the reaction was effected for 6 hours while maintaining the same temperature. After the completion of the reaction, the temperature was elevated to 80°C and the stirring was continued for one hour. Next, 30.4 g of an aqueous solution of polyamide polyamine A2 and 166 g of ion exchanged water were added and the reaction mixture was further stirred for one hour. The polymerization liquid was cooled to 50°C and thereafter, 4 g of ethylene oxide were added to the liquid, followed by aging the reaction mixture at the same temperature for one hour. Thereafter, the reaction mixture was neutralized using 25.0 g of a 48% aqueous solution of sodium hydroxide to obtain 998 g (solid content concentration: 50%, weight average molecular weight: 30,000) of an aqueous solution of polycarboxylic acid polymer B4.

(Production Example B5 (production of polycarboxylic acid polymer))

Into a stainless steel autoclave equipped with a nitrogen introducing tube, a stirring apparatus and a thermometer, 402 g of 3-methyl-3-butene-1-ol 70EO adduct, 286 g of ion exchanged water, 33.1 g of maleic anhydride and 33.1 g of fumaric acid were charged with stirring. The nitrogen substitution was thoroughly performed and the temperature was elevated to 60°C. Thereafter, 22.2 g of a 14% aqueous solution of sodium persulfate were charged and the reaction was effected for 6 hours while maintaining the same temperature. After the completion of the reaction, the temperature was elevated to 80°C and the stirring was continued for one hour. Next, the polymerization mixture was cooled to 50°C and thereto, 164 g of ion exchanged water and 25.0 g of a 48% aqueous solution of sodium hydroxide were added, followed by stirring the reaction mixture further for one hour to obtain 969 g (solid content concentration: 50%, weight average molecular weight: 29,000) of an aqueous solution of polycarboxylic acid polymer B5.

(Production Example B6 (production of polycarboxylic acid polymer))

Into a stainless steel autoclave equipped with a nitrogen introducing tube, a stirring apparatus and a thermometer, 402 g of 3-methyl-3-butene-1-ol 50EO adduct, 286 g of ion exchanged water, 33.1 g of maleic anhydride, 32.6 g of fumaric acid and 25.7 g of methoxypolyethyleneglycol (molecular weight: 250) difumarate were charged with stirring. The nitrogen substitution was thoroughly performed and the temperature was elevated to 60°C. Thereafter, 22.2 g of a 14% aqueous solution of sodium persulfate were charged and the reaction was effected for 6 hours while maintaining the same temperature. After the completion of the reaction, the temperature was elevated to 80°C and the stirring was continued for one hour. Next, 26.7 g of an aqueous solution of polyamide polyamine A1 and 208 g of ion exchanged water were added to the polymerization mixture, and the resultant mixture was further stirred for one hour. The polymerization mixture was cooled to 50°C and was neutralized using 25.0 g of a 48% aqueous solution of sodium hydroxide to obtain 1,061 g (solid content concentration: 50%, weight average molecular weight: 29,000) of an aqueous solution of polycarboxylic acid polymer B6.

(Production Example B7 (production of polycarboxylic acid polymer))

Into a stainless steel autoclave equipped with a nitrogen introducing tube, a stirring apparatus and a thermometer, 506 g of polyoxyalkylene monoallyl monomethyl ether (methyl ether of allylalcohol 30EO adduct), 298 g of ion exchanged water and 76.8 g of fumaric acid were charged with stirring. The nitrogen substitution was thoroughly performed and the temperature was elevated to 60˚C. Thereafter, 119 g of a 14% aqueous solution of sodium persulfate were charged and the reaction was effected for 9 hours while maintaining the same temperature. After the completion of the reaction, the temperature was elevated to 80˚C and the stirring was continued for one hour. Next, the polymerization mixture was cooled to 50˚C to obtain 999 g (solid content concentration: 60%, weight average molecular weight: 16,000) of an aqueous solution of polycarboxylic acid polymer B7.

(Production Example B8 (production of polycarboxylic acid polymer))

Into a stainless steel autoclave equipped with a nitrogen introducing tube, a stirring apparatus and a thermometer, 508 g of polyoxyalkylene ether (allylalcohol 28EO2PO adduct), 299 g of ion exchanged water and 75.5 g of fumaric acid were charged with stirring. The nitrogen substitution was thoroughly performed and the temperature was elevated to 60˚C. Thereafter, 117 g of a 14% aqueous solution of sodium persulfate were charged and the reaction was effected for 9 hours while maintaining the same temperature. After the completion of the reaction, the temperature was elevated to 80˚C and the stirring was continued for one hour. Next, the polymerization mixture was cooled to 50˚C to obtain 999 g (solid content concentration: 60%, weight average molecular weight: 18,100) of an aqueous solution of polycarboxylic acid polymer B8.

(Production Example B9 (production of polycarboxylic acid polymer))

Into a stainless steel autoclave equipped with a nitrogen introducing tube, a stirring apparatus and a thermometer, 506 g of polyoxyalkylene monoallyl monomethyl ether (methyl ether of allylalcohol 30EO adduct), 298 g of ion exchanged water, 51.2 g of fumaric acid and 25.6 g of maleic anhydride were charged with stirring. The nitrogen substitution was thoroughly performed and the temperature was elevated to 60˚C. Thereafter, 119 g of a 14% aqueous solution of sodium persulfate were charged and the reaction was effected for 9 hours while maintaining the same temperature. After the completion of the reaction, the temperature was elevated to 80˚C and the stirring was continued for one hour. The polymerization liquid was cooled to 50˚C to obtain 999 g (solid content concentration: 60%, weight average molecular weight: 19,000) of an aqueous solution of polycarboxylic acid polymer B9.

(Production Example B10 (production of polycarboxylic acid polymer))

Into a stainless steel autoclave equipped with a nitrogen introducing tube, a stirring apparatus and a thermometer, 508 g of allyl polyoxyalkylene ether (allylalcohol 28EO2PO adduct), 299 g of ion exchanged water, 50.3 g of fumaric acid and 24.7 g of maleic anhydride were charged with stirring. The nitrogen substitution was thoroughly performed and the temperature was elevated to 60˚C. Thereafter, 117 g of a 14% aqueous solution of sodium persulfate were charged and the reaction was effected for 9 hours while maintaining the same temperature. After the completion of the reaction, the temperature was elevated to 80˚C and the stirring was continued for one hour. Next, the polymerization liquid was cooled to 50˚C to obtain 999 g (solid content concentration: 60%, weight average molecular weight: 20,300) of an aqueous solution of polycarboxylic acid polymer B12.

(Production Example B11 (production of polycarboxylic acid polymer))

Into a stainless steel autoclave equipped with a nitrogen introducing tube, a stirring apparatus and a thermometer, 508 g of allyl polyoxyalkylene ether (allylalcohol 28EO2PO adduct), 299 g of ion exchanged water and 75.5 g of fumaric acid were charged with stirring. The nitrogen substitution was thoroughly performed and the temperature was elevated to 60˚C. Thereafter, 117 g of a 14% aqueous solution of sodium persulfate were charged and the reaction was effected for 9 hours while maintaining the same temperature. After the completion of the reaction, the temperature was elevated to 80˚C and the stirring was continued for one hour. Next, to the polymerization mixture, 27.1 g of an aqueous solution of polyamide polyamine A1 were added and the polymerization mixture was further stirred for one hour. The polymerization liquid was cooled to 50˚C to obtain 1,027 g (solid content concentration: 60%, weight average molecular weight: 19,600) of an aqueous solution of polycarboxylic acid polymer B11.

(Production Example B12 (production of polycarboxylic acid polymer))

Into a stainless steel autoclave equipped with a nitrogen introducing tube, a stirring apparatus and a thermometer, 402 g of 3-methyl-3-butene-1-ol 50EO adduct, 286 g of ion exchanged water, 59.6 g of fumaric acid and 6.62 g of maleic anhydride were charged with stirring. The nitrogen substitution was thoroughly performed and the temperature was elevated to 60˚C. Thereafter, 22.2 g of a 14% aqueous solution of sodium persulfate were charged and the reaction was effected for 6 hours while maintaining the same temperature. After the completion of the reaction, the temperature was elevated to 80˚C and the stirring was continued for one hour. Next, to the polymerization mixture, 30.4 g of an aqueous solution of polyamide polyamine A3 and 166 g of ion exchanged water were added and the polymerization mixture was further stirred for one hour. The polymerization liquid was cooled to 50˚C and was neutralized using 25.0 g of a 48% aqueous solution of sodium hydroxide to obtain 998 g (solid content concentration: 49%, weight average molecular weight: 31,000) of an aqueous solution of polycarboxylic acid polymer B12.

(Production Example B13 (production of polycarboxylic acid polymer))

Into a stainless steel autoclave equipped with a nitrogen introducing tube, a stirring apparatus and a thermometer, 326 g of 3-methyl-3-butene-1-ol 25EO adduct, 227 g of ion exchanged water, 76.0 g of fumaric acid and 68.5 g of methoxypolyethyleneglycol (molecular weight: 400) difumarate were charged with stirring. The nitrogen substitution was thoroughly performed and the temperature was elevated to 60˚C. Thereafter, 22.0 g of a 14% aqueous solution of sodium persulfate were charged and the reaction was effected for 6 hours while maintaining the same temperature. After the completion of the reaction, the temperature was elevated to 80˚C and the stirring was continued for one hour. Next, to the polymerization mixture, 27.1 g of an aqueous solution of polyamide polyamine A1 and 224 g of ion exchanged water were added and the polymerization mixture was further stirred for one hour. The polymerization mixture was cooled to 50˚C and then was neutralized using 28.5 g of a 48% aqueous solution of sodium hydroxide to obtain 999 g (solid content concentration: 50%, weight average molecular weight: 29,000) of an aqueous solution of polycarboxylic acid polymer B13.

(Production Example C 1)

Into a stainless steel autoclave equipped with a nitrogen introducing tube, a stirring apparatus and a thermometer, 413 g of 3-methyl-3-butene-1-ol 50EO adduct, 324 g of ion exchanged water and 85.3 g of maleic anhydride were charged with stirring. The nitrogen substitution was thoroughly performed and the temperature was elevated to 60˚C. Thereafter, 11.4 g of a 15% aqueous solution of 2,2'-azobis-2-methylpropionamidine hydrochloride were charged and the reaction was effected for 6 hours while maintaining the same temperature. After the completion of the reaction, the temperature was elevated to 80˚C and the aging was performed for one hour. Next, to the polymerization mixture, 166 g of ion exchanged water were added and the polymerization mixture was cooled to 50˚C to obtain 1,000 g (solid content concentration: 50%, weight average molecular weight: 40,000) of an aqueous solution of polycarboxylic acid polymer C1 for Comparative Example.

(Production Example C2)

Into a four-neck flask equipped with a thermometer, a stirring apparatus, a dropping funnel, a nitrogen introducing tube and a reflux capacitor, 395 g of water were charged and the nitrogen substitution was performed inside the flask while stirring water, followed by heating water to 80˚C in a nitrogen atmosphere. Next, into the heated water, a mixture of 250 g of methoxypolyethyleneglycol methacrylate (average addition mol number of ethylene oxide: 5 moles) and 62.5 g of methacrylic acid, 9.4 g of a 10% aqueous solution of thioglycolic acid and 9.4 g of a 10% sodium persulfate solution were dropped over 120 minutes and thereafter, the polymerization mixture was stirred at the same temperature for 4 hours to complete the polymerization reaction. The reaction liquid was cooled to 50˚C and was neutralized using a 48% sodium hydroxide to pH 7 to obtain 837 g (solid content concentration: 40%, weight average molecular weight: 26,000) of an aqueous solution of polycarboxylic acid polymer C2 for Comparative Example.

(Production Example C3)

Into a stainless steel autoclave equipped with a nitrogen introducing tube, a stirring apparatus and a thermometer, 518 g of polyoxyalkylene monoallyl monomethyl ether (monomethyl ether of allylalcohol 30EO adduct), 307 g of ion exchanged water and 66.4 g of maleic anhydride were charged with stirring. The nitrogen substitution was thoroughly performed and the temperature was elevated to 60˚C. Thereafter, 108 g of a 14% aqueous solution of sodium persulfate were charged and the reaction was effected for 9 hours while maintaining the same temperature. After the completion of the reaction, the temperature was elevated to 80˚C and the stirring was continued for one hour. The polymerization

liquid was cooled to 50˚C to obtain 999 g (solid content concentration: 60%, weight average molecular weight: 22,000) of an aqueous solution of polycarboxylic acid polymer C3 for Comparative Example.

(Production Example C4)

Into a stainless steel autoclave equipped with a nitrogen introducing tube, a stirring apparatus and a thermometer, 520 g of polyoxyalkylene monoallyl ether (allylalcohol 28EO2PO adduct), 308 g of ion exchanged water and 65.3 g of maleic anhydride were charged with stirring. The nitrogen substitution was thoroughly performed and the temperature was elevated to 60˚C. Thereafter, 106 g of a 14% aqueous solution of sodium persulfate were charged and the reaction was effected for 9 hours while maintaining the same temperature. After the completion of the reaction, the temperature was elevated to 80˚C and the stirring was continued for one hour. The polymerization liquid was cooled to 50˚C to obtain 999 g (solid content concentration: 60%, weight average molecular weight: 24,000) of an aqueous solution of polycarboxylic acid polymer C4 for Comparative Example.

(Table 1)

Table 1: Formulation of Production Examples B1 to B13

| | Reactive alcohol | Reactive acid group | | Polyamide | Molecular weight |
|---|---|---|---|---|---|
| Production Example B1 | MBO50EO2PO | fumaric acid | maleic anhydride | A1 | 26,000 |
| | 83.2% | 12.3% | 1.4% | 3.1% | |
| Production Example B2 | MBO50EO2PO | fumaric acid | maleic anhydride | A1 | 29,000 |
| | 83.2% | 6.8% | 6.8% | 3.1% | |
| Production Example B3 | MBO50EO | fumaric acid | maleic anhydride | A2 | 31,000 |
| | 83.2% | 12.3% | 1.4% | 3.1% | |
| Production Example B4 | MBO50EO | fumaric acid | maleic anhydride | A2 | 30,000 |
| | 83.2% | 12.3% | 1.4% | 3.1%*1 | |
| Production Example B5 | MBO70EO | fumaric acid | maleic anhydride | - | 29,000 |
| | 85.8% | 7.1% | 7.1% | - | |
| Production Example B6 | MBO50EO | fumaric acid*2 | maleic anhydride | A1 | 29,000 |
| | 79.0% | 11.4% | 6.5% | 3.1% | |
| Production Example B7 | Ally130EO-OMe | fumaric acid | - | - | 16,000 |
| | 86.8% | 13.2% | - | - | |
| Production Example B8 | Ally128EO2PO | fumaric acid | - | - | 18,100 |
| | 87.1% | 12.9% | - | - | |
| Production Example B9 | Ally130EO-OMe | fumaric acid | maleic anhydride | - | 19,000 |
| | 87.0% | 8.7% | 4.3% | - | |
| Production Example B10 | Ally128EO2PO | fumaric acid | maleic anhydride | - | 20,300 |
| | 87.2% | 8.6% | 4.2% | - | |
| Production Example B11 | Ally128EO2PO | fumaric acid | - | A1 | 19,600 |
| | 84.8% | 12.6% | - | 2.6% | |
| Production Example B12 | MBO50EO | fumaric acid | maleic anhydride | A3 | 31,000 |
| | 83.2% | 12.3% | 1.4% | 3.1% | |

(continued)

| | Reactive alcohol | Reactive acid group | | Polyamide | Molecular weight |
|---|---|---|---|---|---|
| Production Example B13 | MBO25EO | fumaric acid *2 | - | A1 | 29,000 |
| | 67.1% | 29.7% | - | 3.2% | |

* 1 Calculated as polyamide A1 by adding ethylene oxide to polyamide A2 during the polymerization process.
*2 Calculated the total mass of fumaric acid and fumaric acid derivatives as the mass of fumaric acid.

(Production Example B6 : fumaric acid: 6.4%, fumaric acid derivatives: 5.0%
Production Example B13 : fumaric acid: 15.5%, fumaric acid derivatives: 14.2%)

(Table 2)

Table 2: Formulation of Production Examples C1 to C4

| | Reactive alcohol | Reactive acid group | | Polyamide | Molecular weight |
|---|---|---|---|---|---|
| Production Example C1 | MBO50EO | - | maleic anhydride | - | 40,000 |
| | 82.9% | - | 17.1% | - | |
| Production Example C2 | MPG5 | - | MAA | - | 26,000 |
| | 80.0% | - | 20.0% | - | |
| Production Example C3 | Ally130EO-OMe | - | maleic anhydride | - | 22,000 |
| | 88.6% | - | 11.4% | - | |
| Production Example C4 | Ally128EO2P O | - | maleic anhydride | - | 24,000 |
| | 88.8% | - | 11.2% | - | |

(Examples 1 to 13, Comparative Examples 1 to 4: Fresh concrete test 1)

Using polycarboxylic acid polymers B1 to B 13 and polycarboxylic acid polymers C 1 to C4 obtained in the above Production Examples, a fresh concrete test was performed in the below concrete blending shown in Table 3. The kneading of a concrete was performed using a 55L forced double-screw mixer by adding water prepared by adding beforehand each polycarboxylic acid polymer (B1 to B 13 or C1 to C4) to water to a coarse aggregate, a cement, a fine aggregate and by kneading the resultant mixture for 90 seconds. Thereafter, immediately after the discharge of the concrete, the concrete was subjected to the fresh concrete test (slump test: JIS A1101 (by measuring the spread of a fresh concrete as a flow value), air amount: JIS A1128, setting property test (by measuring a time until the penetration resistance reaches 3.5N/mm$^2$ which corresponds to the setting start time), concrete viscosity evaluation). Here, since a unified evaluation method for concrete viscosity evaluation in the present industry has not been established, the concrete viscosity was evaluated by a sensory evaluation (softness of kneading).

(Result of fresh concrete test 1)

The concrete blending is shown in Table 3 and the result of the fresh concrete test 1 is shown in Table 4.

(Table 3)

Table 3: Blending of concrete

| W/C (%) | s/a (%) | Unit amount (kg/m$^3$) | | | |
|---|---|---|---|---|---|
| | | Water | Cement | Fine aggregate | Coarse aggregate |
| 50 | 47.5 | 180 | 360 | 847 | 959 |
| Cement: Ordinary Portland cement (manufactured by Taiheiyo Cement Corporation; density: 3.16 g/cm$^3$)<br>Fine aggregate: Land sand (product in Kimitsu; density: 2.64 g/cm$^3$)<br>Coarse aggregate: Crushed limestone (product in Torigatayama; density 2.70 g/cm$^3$) | | | | | |

(Table 4)

Table 4: Result of fresh concrete test 1

| | Used polymer | Added ratio*1 | Immediately after kneaded | | Air amount (volume %) | Concrete temperature (°C) | Setting time (hours - minutes) | Concrete viscosity*2 |
|---|---|---|---|---|---|---|---|---|
| | | | Slump (cm) | Flow (mm) | | | | |
| Example 1 | B1 | 0.125 | 22.5 | 430×420 | 2.5 | 23.0 | 4 - 05 | A |
| Example 2 | B2 | 0.125 | 22.0 | 420×415 | 2.7 | 23.0 | 4 - 10 | A |
| Example 3 | B3 | 0.125 | 21.5 | 405×395 | 2.0 | 23.0 | 4 - 10 | A |
| Example 4 | B4 | 0.125 | 22.0 | 415×405 | 2.0 | 23.0 | 4 - 10 | A |
| Example 5 | B5 | 0.125 | 21.5 | 405×380 | 1.9 | 23.0 | 4 - 15 | B |
| Example 6 | B6 | 0.125 | 21.0 | 390×390 | 2.5 | 23.5 | 4 - 05 | A |
| Example 7 | B7 | 0.150 | 21.5 | 405×395 | 2.2 | 23.0 | 4 - 40 | B |
| Example 8 | B8 | 0.150 | 21.5 | 400×390 | 2.4 | 23.0 | 4 - 45 | B |
| Example 9 | B9 | 0.167 | 21.0 | 395×375 | 2.1 | 23.0 | 5 - 00 | C |
| Example 10 | B10 | 0.167 | 21.0 | 385×370 | 2.3 | 23.0 | 5 - 05 | C |
| Example 11 | B11 | 0.150 | 22.0 | 410×400 | 2.1 | 23.0 | 4 - 40 | A |
| Example 12 | B12 | 0.125 | 21.0 | 400×395 | 2.0 | 23.0 | 4 - 15 | B |
| Example 13 | B13 | 0.130 | 21.5 | 405×405 | 2.5 | 22.0 | 4 - 10 | B |
| Comparative Example 1 | C1 | 0.125 | 17.5 | 300×265 | 2.5 | 23.5 | 4 - 15 | D |
| Comparative Example 2 | C2 | 0.125 | 21.5 | 390×360 | 2.5 | 23.5 | 4 - 40 | D |
| Comparative Example 3 | C3 | 0.150 | 17.0 | 290×280 | 2.4 | 23.0 | 5 - 20 | D |
| Comparative Example 4 | C4 | 0.150 | 17.0 | 295×290 | 2.6 | 23.0 | 5 - 30 | D |

*1 Additive amount (solid content) of dispersant relative to the mass of the cement: % by mass

*2 Concrete viscosity evaluation:

A The concrete is soft while being kneaded and has dew. In addition, only by applying a light vibration to the concrete, the slump flow further spreads.

B This criteria is a little poorer than the evaluation A, however, the handling is light and the concrete has dew.

C This criteria is poorer than the evaluation B, however, the concrete has dew.

D The concrete is hard while being kneaded and has rather rough touch.

As shown above, in the concrete test result, all of Examples 1 to 13 has imparted more advantageous water reducing property than that of Comparative Examples 1 to 4. Among them, when Example 1 and Example 2 in which only the use ratio of fumaric acid was changed are compared, there has been obtained the result that Example 1 in which the use ratio of fumaric acid was largely increased has more enhanced water reducing performance than that of Example 2 in which fumaric acid and maleic acid were used in the same amount as each other.

In addition, in through all of Examples 1 to 13, in comparison with the results of Comparative Examples, there has been obtained the results that the concrete viscosity was maintained at low, that in spite of the fact that the set air amount was so low as around 2.0 to 2.5%, the concrete remains soft while being kneaded and is excellent in the fluidity and also that the concrete has low setting retardation.

Further, when Examples 7 to 11 in which allyl alcohol was used are compared with Comparative Examples 3 and 4 in which fumaric acid was not used, there has been obtained the result that the water reducing performance is enhanced and the setting retardation and the concrete viscosity are improved.

Here, in the concrete viscosity evaluation in the present examples, "dew" representing the state of the concrete indicates a state in which there is no flooding of surface water and the concrete is appropriately wet. When the concrete

is too wet, surface water floods, and the segregation of aggregate, the bleeding, and the like are likely to be caused. In addition, "roughness" indicates a state in which the wetness of the concrete is scant and a state in which rock pocket (heterogeneous portions having a large amount of voids which are generated by the concentration of mainly only coarse aggregate in the surface or the inside of the concrete) are likely to be generated due to the deficiency of the fluidity and the deficiency of the filling when a vibration is applied to the concrete. "Handling is light" indicates a state in which the feeling such that the concrete is softer compared to the measured air amount, is imparted and also a state in which: kneading property is light; the resistance of the concrete during a pressure feed by a pump is low; the materials have feeling of oneness; and the concrete has high resistance against the material segregation.

(Fresh concrete test 2)

Using polycarboxylic acid polymers B1 to B3 (polyamide polyamine was formulated) and B5, B7 and B8 (polyamide polyamine was not formulated), the test was performed three times by the same concrete blending (see paragraph [0067] and (Table 1)) and the same procedure (see paragraph [0065]) as those in the fresh concrete test 1 to measure each of the slump value and the air amount.
In Table 5, the measurement results of the slump value and the air amount are shown.
(Table 5)

Table 5: Result of fresh concrete test 2

| | Used polymer | Added ratio*1 | First | | Second | | Third | |
|---|---|---|---|---|---|---|---|---|
| | | | Slump (cm) | Air amount (volume %) | Slump (cm) | Air amount (volume %) | Slump (cm) | Air amount (volume %) |
| Example 14 | B1 | 0.125 | 22.5 | 2.5 | 22.5 | 2.7 | 22.5 | 2.6 |
| Example 15 | B2 | 0.125 | 22.0 | 2.7 | 22.0 | 2.5 | 22.0 | 2.4 |
| Example 16 | B3 | 0.125 | 21.5 | 2.0 | 21.5 | 2.2 | 21.0 | 2.3 |
| Example 17 | B5 | 0.125 | 21.5 | 1.9 | 21.0 | 2.6 | 21.0 | 2.2 |
| Example 18 | B7 | 0.150 | 21.5 | 2.2 | 21.5 | 1.8 | 21.0 | 2.8 |
| Example 19 | B8 | 0.150 | 22.5 | 2.4 | 21.5 | 2.9 | 22.0 | 2.0 |

*1 Additive amount (solid content) of dispersant relative to the mass of the cement: % by mass

As shown in Table 5, there has been obtained a result that in Examples 14 to 16 using polycarboxylic acid polymers B1 to B3 containing polyamide polyamine, an air amount is stably contained..On the other hand, in Examples 17 to 19 using polycarboxylic acid polymers B5, B7 and B8 containing no polyamide polyamine, there has been observed such a tendency that the air amount varied depending on the test.

(Result of fresh concrete test 3)

Table 6 shows a concrete formulation in a region in which water-cement ratio (W/C) falls below 50% (W/C=28%), and Table 7 shows a fresh concrete test result. The test was performed under various conditions such as the kneading of concrete according to the fresh concrete test 1 (see paragraph [0065]).
Here, in the present test, 50 cm flow reaching time (a time until the flow value of the fresh concrete reaches 50 cm) was measured instead of a setting property test.
(Table 6)

Table 6: Blending of concrete 3

| W/C (%) | s/a (%) | Unit amount (kg/m$^3$) | | | |
|---|---|---|---|---|---|
| | | Water | Cement | Fine aggregate | Coarse aggregate |
| 28 | 46.7 | 170 | 607 | 749 | 875 |

Cement: Ordinary Portland cement (manufactured by Taiheiyo Cement Corporation; density: 3.16 g/cm$^3$)
Fine aggregate: Land sand (product in Kimitsu; density: 2.64 g/cm$^3$)
Coarse aggregate: Crushed limestone (product in Torigatayama; density 2.70 g/cm$^3$)

(Table 7)

Table 7: Result of fresh concrete test 3

| | Used polymer | Added ratio*1 | Immediately after kneaded | Air amount (volume %) | Concrete temperature (°C) | 50 cm reaching time (sec) | Concrete viscosity*2 |
|---|---|---|---|---|---|---|---|
| | | | Flow (cm) | | | | |
| Example 20 | B1 | 0.26 | 65.5×64.5 | 2.9 | 23.0 | 4.2 | A |
| Example 21 | B2 | 0.26 | 64.5×64.0 | 3.0 | 23.0 | 4.8 | A |

*1 Additive amount (solid content) of dispersant relative to the mass of the cement: % by mass
*2 Concrete viscosity evaluation:
A The concrete is soft while being kneaded and has dew. In addition, only by applying a light vibration to the concrete, the slump flow further spreads.

As shown above, also in a region in which the water-cement ratio (W/C) is 28%, advantageous water reducing property has been exhibited.
In other words, it has been confirmed that the cement dispersant of the present invention has water reducing performance capable of being used not only for concretes in a general-purpose strength level but also for
a high-strength concrete that is a concrete having a water-cement ratio (W/C) of 20 to 50%. In addition, it has been approved that the cement dispersant of the present invention is excellent in fluidity, has a short setting time and can thoroughly correspond to the application to high-strength concrete products.

(Result of fresh concrete test 4)

Table 8 shows a concrete formulation in a region in which water-cement ratio (W/C) exceeds 50% (W/C=55%), and Table 9 shows a fresh concrete test result. The test was performed under various conditions such as the kneading of concrete according to the fresh concrete test 1 (see paragraph [0065]).
(Table 8)

Table 8: Blending of concrete 4

| W/C (%) | s/a (%) | Unit amount (kg/m$^3$) | | | |
|---|---|---|---|---|---|
| | | Water | Cement | Fine aggregate | Coarse aggregate |
| 55 | 45 | 175 | 318 | 822 | 1031 |

Cement: Ordinary Portland cement (manufactured by Taiheiyo Cement Corporation; density: 3.16 g/cm$^3$)
Fine aggregate: Land sand (product in Kimitsu; density: 2.64 g/cm$^3$)
Coarse aggregate: Crushed limestone (product in Torigatayama; density 2.70 g/cm$^3$)

(Table 9)

Table 9: Result of fresh concrete test 4

| | Used polymer | Added ratio*1 | Immediately after kneaded | | Air amount (volume %) | Concrete temperature (°C) | Setting time (hours - minutes) | Concrete viscosity*2 |
|---|---|---|---|---|---|---|---|---|
| | | | Slump (cm) | Flow (mm) | | | | |
| Example 22 | B1 | 0.11 | 21.0 | 380×370 | 3.5 | 21.0 | 4 - 05 | A |
| Example 23 | B5 | 0.11 | 20.0 | 355×350 | 3.6 | 21.5 | 4 - 15 | B |
| Comparative Example 5 | NS*3 | 0.11 | 8.5 | 210×210 | 3.8 | 21.0 | 4 - 00 | D |
| Comparative Example 6 | C1 | 0.11 | 13.0 | 255×250 | 3.1 | 21.0 | 4 - 20 | C |

*1 Additive amount (solid content) of dispersant relative to the mass of the cement: % by mass
*2 Concrete viscosity evaluation:
A The concrete is soft while being kneaded and has dew. In addition, only by applying a light vibration to the concrete, the slump flow further spreads.
B This criteria is a little poorer than the evaluation A, however, the handling is light and the concrete has dew.
C This criteria is poorer than the evaluation B, however, the concrete has dew.
D The concrete is hard while being kneaded and has rather rough touch.
*3 Naphthalene sulfonic acid-formalin condensate (standard type)

As shown above, in the result of the test using polycarboxylic acid polymers B1 and B5 which are the cement dispersants of the present invention, advantageous water reducing property was exhibited also in a region in which the water-cement ratio (W/C) is 55%. In other words, it has been confirmed that the cement dispersant of the present invention has high water reducing performance at the same additive amount in a general-purpose strength concrete, that is a concrete having a water-cement ratio (W/C) of 50 to 60%, in comparison with a case where an existing naphthalene sulfonic acid-formalin condensate (standard type) or the polycarboxylic acid polymer C1 of Comparative Example containing no structural unit derived from fumaric acid in the polymer structure is used.
In addition, the concrete using the polycarboxylic acid polymer B1 which is the cement dispersant of the present invention has been resulted in that it is extremely excellent in the concrete viscosity in comparison with a concrete using other polycarboxylic acid polymers containing no structural unit derived from fumaric acid or using naphthalene sulfonic acid-formalin condensate (standard type) which is a conventional cement dispersant.

(Fresh concrete test 5)

The fresh concrete test was performed on the polycarboxylic acid polymer B1, B5 and C1 using an ordinary Portland cement, a high early strength Portland cement, a moderate heat Portland cement and a Portland blast furnace cement (B-type). Each test was performed in the same water-cement ratio (W/C=40%) and the additive amount of each polymer was determined based on the used amount of the polycarboxylic acid polymer B1. Various conditions such as the kneading of the concrete were according to the fresh concrete test 1 (see paragraph [0065]).

(Result of fresh concrete test 5)

Table 10 shows a concrete formulation having a water-cement ratio (W/C) of 40%, and Table 11 shows the result of the fresh concrete test.

(Table 10)

Table 10: Blending of concrete 5

| W/C (%) | s/a (%) | Unit amount (kg/$m^3$) | | | |
|---|---|---|---|---|---|
| | | Water | Cement | Fine aggregate | Coarse aggregate |
| 40 | 47.3 | 170 | 425 | 828 | 943 |

Cement: Ordinary Portland cement (manufactured by Taiheiyo Cement Corporation; density: 3.16 g/$cm^3$)
High early strength Portland cement (manufactured by Taiheiyo Cement Corporation; density: 3.13 g/$cm^3$)
Moderate heat Portland cement (manufactured by Taiheiyo Cement Corporation; density: 3.22 g/$cm^3$)
Blast furnace cement (B-type, slug blending ratio: 70%, density: 3.05 g/$cm^3$)
Fine aggregate: Land sand (product in Kimitsu; density: 2.64 g/$cm^3$)
Coarse aggregate: Crushed limestone (product in Torigatayama; 2.70 g/$cm^3$)

(Table 11)

Table 11: Result of fresh concrete test 5

| | Used polymer | Added ratio*1 | Used cement | Immediately after kneaded | | Air amount (volume %) | Concrete temperature (°C) | Concrete viscosity*2 |
|---|---|---|---|---|---|---|---|---|
| | | | | Slump (cm) | Flow (mm) | | | |
| Example 24 | B1 | 0.15 | Ordinary cement | 20.5 | 360×350 | 3.4 | 21.5 | A |
| Example 25 | B5 | 0.15 | | 20.0 | 345×340 | 3.6 | 20.5 | B |
| Comparative Example 7 | C1 | 0.15 | | 18.0 | 295×290 | 3.6 | 21.0 | C |
| Example 26 | B1 | 0.16 | High early strength cement | 21.0 | 375×360 | 3.8 | 22.0 | B |
| Example 27 | B5 | 0.16 | | 19.5 | 335×320 | 3.9 | 22.5 | B |
| Comparative Example 8 | C1 | 0.16 | | 17.5 | 260×260 | 3.2 | 22.5 | D |
| Example 28 | B1 | 0.12 | Moderate heat cement | 22.0 | 400×395 | 3.5 | 20.5 | B |
| Example 29 | B5 | 0.12 | | 20.0 | 350×340 | 3.4 | 20.5 | B |
| Comparative Example 9 | C1 | 0.12 | | 18.5 | 315×310 | 3.5 | 20.0 | D |
| Example 30 | B1 | 0.12 | Blast furnace cement (B-type) | 22.0 | 405×400 | 3.5 | 21.0 | A |
| Example 31 | B5 | 0.12 | | 21.0 | 370×365 | 3.3 | 21.5 | B |
| Comparative Example 10 | C1 | 0.12 | | -*3 | -*3 | 3.4 | 21.0 | -*4 |

*1 Additive amount (solid content) of dispersant relative to the mass of the cement: % by mass

*2 Concrete viscosity evaluation:

A The concrete is soft while being kneaded and has dew. In addition, only by applying a light vibration to the concrete, the slump flow further spreads.

B This criteria is a little poorer than the evaluation A, however, the handling is light and the concrete has dew.

C This criteria is poorer than the evaluation B, however, the concrete has dew.

D The concrete is hard while being kneaded and has rather rough touch.

*3 Since a material segregation has been caused in the concrete, the measured values for the slump and the flow are defined as absent.

*4 Since a material segregation has been caused in the concrete, the viscosity evaluation has been omitted out of the objective of the concrete evaluation.

As shown in Table 11, in the fresh concrete test using several types of cements including an ordinary Portland cement, there is obtained the result that various types of cements using the polycarboxylic acid polymers B1 and B5 which are the cement dispersant of the present invention (Examples 24 to 31) can exhibit advantageous water reducing performance stably only by controlling the additive amount a little corresponding to the reactivity of each cement.
On the other hand, in Comparative Examples 7 to 10 using the polycarboxylic acid polymer C1 of Comparative Example containing no structural unit derived from fumaric acid in the structure of the polymer, the test performed under the condition of the same type of cement and the same additive amount of the cement dispersant has resulted in that an ordinary cement, a moderate heat cement and a high early strength cement has caused the deficiency of water reducing property and a blast furnace cement (B-type) has caused a material segregation in comparison with Examples 24 to 31. In addition, there is obtained the result that, when an ordinary cement and a blast furnace cement (B-type) are used, the concrete using the polycarboxylic acid polymer B1 which is the cement dispersant of the present invention is extremely

excellent in the concrete viscosity in comparison with the concretes using other polycarboxylic acid polymers containing no structural unit derived from fumaric acid.

Thus, when the cement dispersant of the present invention is applied to a concrete, there is obtained the result such that not only exhibiting excellent water reducing property but also enhancing performance that is important during a concrete construction, for example, the concrete can be a fresh concrete excellent in self-compacting property such as maintaining the viscosity at low, being soft while the concrete being kneaded and being excellent in the fluidity and further improving the setting retardation.
In other words, it is considered that these results have been exerted by incorporating a structural unit derived from fumaric acid compounds in the cement dispersant and further, a synergistic effect has been exhibited by using a polyamide polyamine in combination or by introducing propylene oxide partially.

## Claims

**1.** A cement dispersant which has a polycarboxylic acid polymer composed of a structural unit derived from a polyalkyleneglycol alkenyl ether-based compound and a structural unit derived from an unsaturated carboxylic acid-based compound, wherein
a part or all of the structural unit derived from the unsaturated carboxylic acid-based compound is a structural unit derived from fumaric acid and/or a fumaric acid derivative.

**2.** The cement dispersant according to claim 1, wherein the polycarboxylic acid polymer is composed of the following structural unit (I) and structural unit (II) and a part or all of the structural unit (II) is a structural unit derived from fumaric acid and/or a fumaric acid derivative:

[Chemical Formula 1]

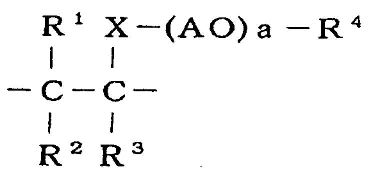

(I)

(where $R^1$, $R^2$, $R^3$ and $R^4$ independently represent a hydrogen atom or a C1 to C22 hydrocarbon group; X represents $-(CH_2)bO-$; AO represents a C2 to C4 alkylene oxide group; a represents an average addition mol number of an alkylene oxide of 1 to 200; and b represents an integer of 1 to 20), and

[Chemical Formula 2]

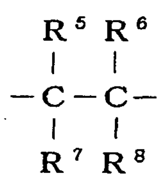

(II)

(where $R^5$ and $R^6$ independently represent a hydrogen atom or a C1 to C22 hydrocarbon group; $R^7$ and $R^8$ independently represent -COOH, -COOM or -COOY, and a part of $R^7$ and $R^8$ can be together to form an acid anhydride; M represents an alkali metal, an alkaline earth metal, ammonium or alkanolamine; Y represents a C1 to C22 hydrocarbon group or $(AO)_c-R^9$; AO represents a C2 to C4 alkylene oxide group; c represents an average addition mol number of an alkylene oxide of 1 to 200; and $R^9$ represents a hydrogen atom or a C1 to C22 hydrocarbon group).

**3.** The cement dispersant according to claim 2, wherein the polycarboxylic acid polymer is composed of, besides the structural unit (I) and the structural unit (II), further the following structural unit (III):

[Chemical Formula 3]

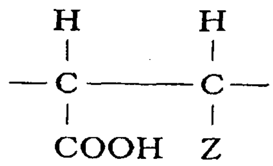

(III)

(where Z represents a group in which a polyamide polyamine produced by condensing a dibasic acid and a polyalkylene polyamine and/or a polyamide polyamine modified product produced by adding 0.1 to 10 moles of a C2 to C4 alkylene oxide to the polyamide polyamine relative to one equivalent of an activated imino group, an amino group, and an amide residue of the polyamide polyamine, is/are bonded to a carbon atom of a main chain via an amide bond).

**4.** A cement dispersant comprising, besides the polycarboxylic acid polymer as claimed in any one of claims 1 to 3, a polyamide polyamine produced by condensing a dibasic acid and a polyalkylene polyamine and/or a polyamide polyamine modified product produced by adding 0.1 to 10 moles of a C2 to C4 alkylene oxide to the polyamide polyamine relative to one equivalent of an activated imino group, an amino group, and an amide residue of the polyamide polyamine.

**INTERNATIONAL SEARCH REPORT**

International application No.
PCT/JP2007/067875

A. CLASSIFICATION OF SUBJECT MATTER
*C04B24/26*(2006.01)i, *C08F290/06*(2006.01)i, *C08G65/332*(2006.01)i, *C08G81/02*(2006.01)i, *C04B103/40*(2006.01)n

According to International Patent Classification (IPC) or to both national classification and IPC

B. FIELDS SEARCHED

Minimum documentation searched (classification system followed by classification symbols)
C04B7/00-32/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-2174 A (Nippon Shokubai Co., Ltd.), 08 January, 2004 (08.01.04), Claim 2; Par. Nos. [0007], [0011] to [0013], [0021], [0023] to [0066] & WO 2003/091180 A1 Claim 9; page 9, lines 14 to 22; page 10, line 16 to page 11, line 7; page 11, lines 22 to 35; page 16, lines 8 to 35; page 64, line 14 to page 71, line 6 & EP 1497241 A1 & US 2004/0260011 A1 | 1-4 |
| A | JP 2004-182583 A (Nippon Shokubai Co., Ltd.), 02 July, 2004 (02.07.04), Claim 1; Par. Nos. [0017] to [0050] (Family: none) | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 November, 2007 (14.11.07) | 04 December, 2007 (04.12.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2007/067875

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-191356 A (Sika Ltd.), 11 July, 2000 (11.07.00), Claims & EP 1184353 A1 Claims & US 6680348 B1 & WO 2000/039045 A1 | 1-4 |
| A | JP 7-291691 A (Nippon Kayaku Co., Ltd.), 07 November, 1995 (07.11.95), Claims; examples (Family: none) | 1-4 |
| A | JP 5-85786 A (Dainippon Ink And Chemicals, Inc.), 06 April, 1993 (06.04.93), Claims; examples (Family: none) | 1-4 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 58038380 B
- JP 10236858 A
- JP 2001302306 A
- JP 2003192722 A
- JP 2003327644 A
- JP 62068806 A
- JP 3780465 B
- JP 59018338 B
- JP 2628486 B
- JP 2774445 B
- JP 3235002 B
- JP 3336456 B
- JP 3780456 B